(19) Europäisches Patentamt
European Patent Office
Office européen des brevets

(11) **EP 3 677 034 B1**

(12) **EUROPEAN PATENT SPECIFICATION**

(45) Date of publication and mention
of the grant of the patent:
**28.08.2024 Bulletin 2024/35**

(21) Application number: **18762755.9**

(22) Date of filing: **28.08.2018**

(51) International Patent Classification (IPC):
*H04N 19/82* (2014.01)  *H04N 19/176* (2014.01)
*H04N 19/117* (2014.01)  *H04N 19/124* (2014.01)
*H04N 19/136* (2014.01)

(52) Cooperative Patent Classification (CPC):
**H04N 19/82; G06N 3/045; G06N 3/08;
H04N 19/117; H04N 19/124; H04N 19/136;
H04N 19/176; G06N 3/048**

(86) International application number:
**PCT/US2018/048333**

(87) International publication number:
**WO 2019/046295 (07.03.2019 Gazette 2019/10)**

(54) **METHOD AND APPARATUS FOR FILTERING WITH MODE-AWARE DEEP LEARNING**

VERFAHREN UND VORRICHTUNG ZUM FILTERN MIT MODUSBEWUSSTEM TIEFENLERNEN

PROCÉDÉ ET APPAREIL DE FILTRAGE COMPORTANT UN APPRENTISSAGE PROFOND
SENSIBLE AU MODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2017 EP 17306101**

(43) Date of publication of application:
**08.07.2020 Bulletin 2020/28**

(60) Divisional application:
**24190524.9**

(73) Proprietor: **InterDigital VC Holdings, Inc.
Wilmington, DE 19809 (US)**

(72) Inventors:
 • **GALPIN, Franck**
   **35576 Cesson-Sévigné (FR)**
 • **DE MARMIESSE, Gabriel**
   **35576 Cesson-Sévigné (FR)**
 • **BORDES, Phillippe**
   **35576 Cesson-Sévigné (FR)**

(74) Representative: **Schmidt-Uhlig, Thomas
Rittner & Partner
Patentanwälte mbB
Schiffgraben 17
30159 Hannover (DE)**

(56) References cited:
**WO-A1-2017/036370  US-A1- 2017 161 876**

 • **LIN RONGQUN ET AL: "Deep Convolutional
Neural Network for Decompressed Video
Enhancement", 2016 DATA COMPRESSION
CONFERENCE (DCC), IEEE, 30 March 2016
(2016-03-30), pages 617, XP033027777, DOI:
10.1109/DCC.2016.83**

**Description**

TECHNICAL FIELD

The present embodiments generally relate to a method and an apparatus for video encoding and decoding, and more particularly, to a method and an apparatus for filtering with a mode-aware neural network in video encoding and decoding.

BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. To reconstruct the video, the compressed data is decoded by inverse processes corresponding to the prediction, transform, quantization and entropy coding. To reduce artifacts, in-loop filtering can be used.

WO 2017/036370 A1 discloses a method of video coding incorporating a deep neural network. A target signal is processed using the deep neural network, where the target signal provided to the input of the deep neural network corresponds to the reconstructed residual, output from the prediction process, the reconstruction process, one or more filtering processes, or a combination thereof. The output data from the output of the deep neural network is provided for the encoding process or the decoding process. The deep neural network can be used to restore pixel values of the target signal or to predict a sign of one or more residual pixels between the target signal and an original signal.

US 2017/0161876 A1 discloses a method for smoothing images using machine learning. A machine learning system is trained using multiple training items. Each training item includes a boundary shape representation and a positional indicator. To generate the training item, a smooth image is downscaled to produce a corresponding blocky image that includes multiple blocks. For a given block, the boundary shape representation encodes a blocky boundary in a neighborhood around the given block. A positional indicator reflects a distance between the given block and a smooth boundary of the smooth image.

SUMMARY

The invention is as set out in the appended independent claims. Advantageous refinements are defined in the dependent claims.

According to a general aspect, a method for video encoding is presented, comprising: accessing a first reconstructed version of an image region of a picture of a video, said image region being partitioned into a plurality of blocks; and filtering said first reconstructed version of said image region by a neural network to form a second reconstructed version of said image region, wherein said neural network is responsive to block boundary information for samples in said image region and at least one of (1) information based on at least a quantization parameter for each of said plurality of blocks in said image region, and (2) prediction samples for said image region, wherein said block boundary information for said image region is organized into a data array, at a same size as said first reconstructed version of said image region, to be used as an input channel to said neural network, wherein a sample in said data array indicates whether a corresponding sample in an image block of said image region is at a partition frontier of said image block.

According to another general aspect, a method for video decoding is presented, comprising: accessing a first reconstructed version of an image region of a picture of an encoded video, said image region being partitioned into a plurality of blocks; and filtering said first reconstructed version of said image region by a neural network to form a second reconstructed version of said image region, wherein said neural network is responsive to block boundary information for samples in said image region and at least one of (1) information based on at least a quantization parameter for each of said plurality of blocks in said image region, and (2) prediction samples for said image region, wherein said block boundary information for said image region is organized into a data array, at a same size as said first reconstructed version of said image region, to be used as an input channel to said neural network, wherein a sample in said data array indicates whether a corresponding sample in an image block of said image region is at a partition frontier of said image block.

According to another general aspect, an apparatus for video encoding is presented, comprising at least a memory and one or more processors, said one or more processors being configured to: access a first reconstructed version of an image region of a picture of a video, said image region being partitioned into a plurality of blocks; and filter said first reconstructed version of said image region by a neural network to form a second reconstructed version of said image region, wherein said neural network is responsive to block boundary information for samples in said image region and at least one of (1) information based on at least a quantization parameter for each of said plurality of blocks in said image region, and (2) prediction samples for said image region, wherein said block boundary information for said image region is organized into a data array, at a same size as said first reconstructed version of said image region, to be used as an input channel to said neural network, wherein a sample in said data array indicates whether a corresponding sample in an image block of said image region is at a boundary of said image block.

According to another general aspect, an apparatus for video decoding is presented, comprising at least a memory and one or more processors, said one or more processors being configured to: access a first reconstructed version of an image region of a picture of an encoded video, said image region being partitioned into a plurality of blocks; and filter said first reconstructed version of said image region by a neural network to form a second reconstructed version of said image region, wherein said neural network is responsive to block boundary information for samples in said image region and at least one of (1) information based on at least a quantization parameter for each of said plurality of blocks in said image region, and (2) prediction samples for said image region, wherein said block boundary information for said image region is organized into a data array, at a same size as said first reconstructed version of said image region, to be used as an input channel to said neural network, wherein a sample in said data array indicates whether a corresponding sample in an image block of said image region is at a partition frontier of said image block.

In one embodiment, said neural network is a convolutional neural network. Said neural network may be based on residue learning.

To use said block boundary information as input for said neural network, a data array having a same size as said image region is formed, wherein each sample in said data array indicates whether a corresponding sample in an image block of said image region is at a partition frontier of said image block.

To use said information based on at least a quantization parameter, a second data array having a same size as said image region may be formed, wherein each sample in said second data array is associated with said at least a quantization parameter for each of said plurality of blocks in said image region. Said information based on at least a quantization parameter may be a quantization step size.

In one embodiment, said neural network is further responsive to one or more of (1) prediction residuals of said image region and (2) at least an intra prediction mode of said image region.

While said neural network can be responsive to different channels of information as input as described above, one or more channels of input to said neural network can be used as input for an intermediate layer of said neural network.

In one embodiment, said first reconstructed version of said image region may be based on said prediction samples and prediction residuals for said image region. Said second reconstructed version of said image region can be used to predict another image region, for intra or inter prediction.

When encoding or decoding, said image block may correspond to a Coding Unit (CU), a Coding Block (CB), or a Coding Tree Unit (CTU).

The present embodiments also provide a computer readable storage medium having stored thereon instructions for encoding or decoding video data according to the methods described above.

BRIEF DESCRIPTION OF THE DRAWINGS

FIG. 1 illustrates a block diagram of an exemplary HEVC (High Efficiency Video Coding) video encoder.

FIG. 2 illustrates a block diagram of an exemplary HEVC video decoder.

FIG. 3 illustrates four in-loop filters used in JEM 6.0.

FIG. 4 illustrates an exemplary CNN (Convolutional Neural Network).

FIG. 5 illustrates a Variable-filter-size Residue-learning CNN (VRCNN) designed as a post-processing filter for HEVC.

FIGs. 6A, 6B and 6C illustrate the training process, the encoding process and the decoding process, respectively, using a CNN as an in-loop filter.

FIG. 7 illustrates an exemplary method for generating a boundary image, according to an embodiment.

FIG. 8A illustrates exemplary partition frontiers in an exemplary image, FIG. 8B illustrates a corresponding boundary image, FIG. 8C illustrates exemplary CU partitions of a CTU, and FIG. 8D illustrates a corresponding QP (Quantization Parameter) image region.

FIGs. 9A, 9B and 9C illustrate the training process, the encoding process and the decoding process, respectively, using a mode-aware CNN as an in-loop filter, according to an embodiment.

FIG. 10 illustrates a block diagram of an exemplary system in which various aspects of the exemplary embodiments may be implemented.

DETAILED DESCRIPTION

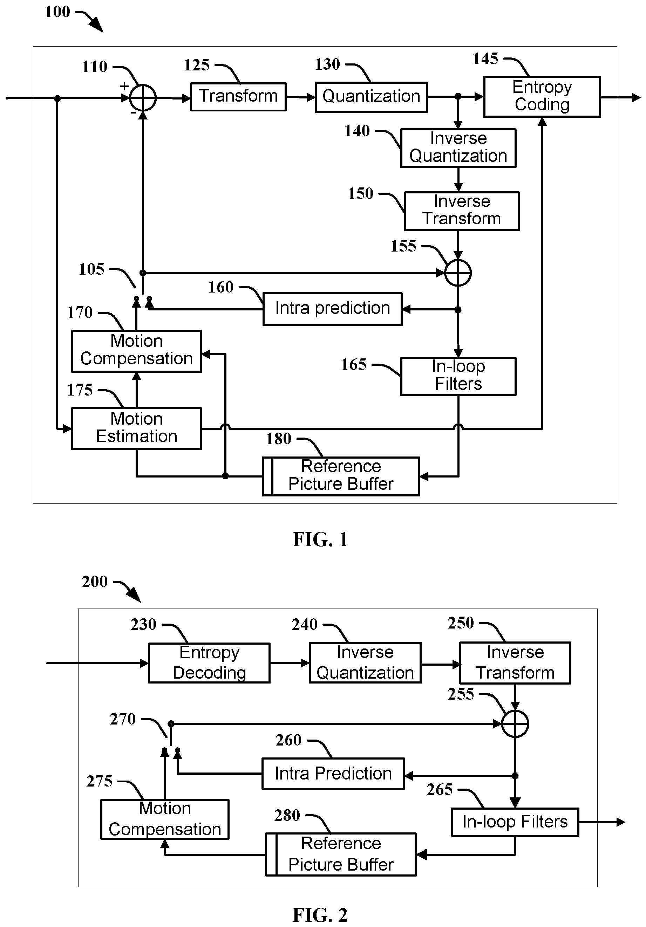

FIG. 1 illustrates an exemplary HEVC encoder 100. To encode a video sequence with one or more pictures, a picture is partitioned into one or more slices where each slice can include one or more slice segments. A slice segment is organized into coding units, prediction units and transform units.

In the present application, the terms "reconstructed" and "decoded" may be used interchangeably, the terms "image," "picture" and "frame" may be used interchangeably. Usually, but not necessarily, the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

In order to exploit the spatial redundancy, CUs in intra mode are predicted from reconstructed neighboring samples within the same slice. The causal neighboring CUs have already been encoded/decoded when the encoding/decoding of the current CU is considered. To avoid mismatch, the encoder and the decoder have the same prediction. Therefore, both the encoder and the decoder use the information from the reconstructed/decoded neighboring causal CUs to form prediction for the current CU.

A set of 35 intra prediction modes is available in HEVC, including a planar (indexed 0), a DC (indexed 1) and 33 angular prediction modes (indexed 2-34). The intra prediction reference is reconstructed from the row and column adjacent to the current block. The reference may extend over two times the block size in horizontal and vertical direction using available samples from previously reconstructed blocks. When an angular prediction mode is used for intra prediction, reference samples can be copied along the direction indicated by the angular prediction mode.

For an inter CU, the corresponding coding block is further partitioned into one or more prediction blocks. Inter prediction is performed on the PB level, and the corresponding PU contains the information about how inter prediction is performed. The motion information (i.e., motion vector and reference picture index) can be signaled in two methods, namely, "merge mode" and "advanced motion vector prediction (AMVP)."

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

FIG. 2 illustrates a block diagram of an exemplary HEVC video decoder 200. In the exemplary decoder 200, a bitstream is decoded by the decoder elements as described below. Video decoder 200 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (230) to obtain transform coefficients, motion vectors, and other coded information. The transform coefficients are de-quantized (240) and inverse transformed (250) to decode the prediction residuals. Combining (255) the decoded prediction residuals and the predicted block, an image block is reconstructed. The predicted block may be obtained (270) from intra prediction (260) or motion-compensated prediction (i.e., inter prediction) (275). As described above, AMVP and merge mode techniques may be used to derive motion vectors for motion compensation, which may use interpolation filters to calculate interpolated values for sub-integer samples of a reference block. In-loop filters (265) are applied to the reconstructed image. The filtered image is stored at a reference picture buffer (280).

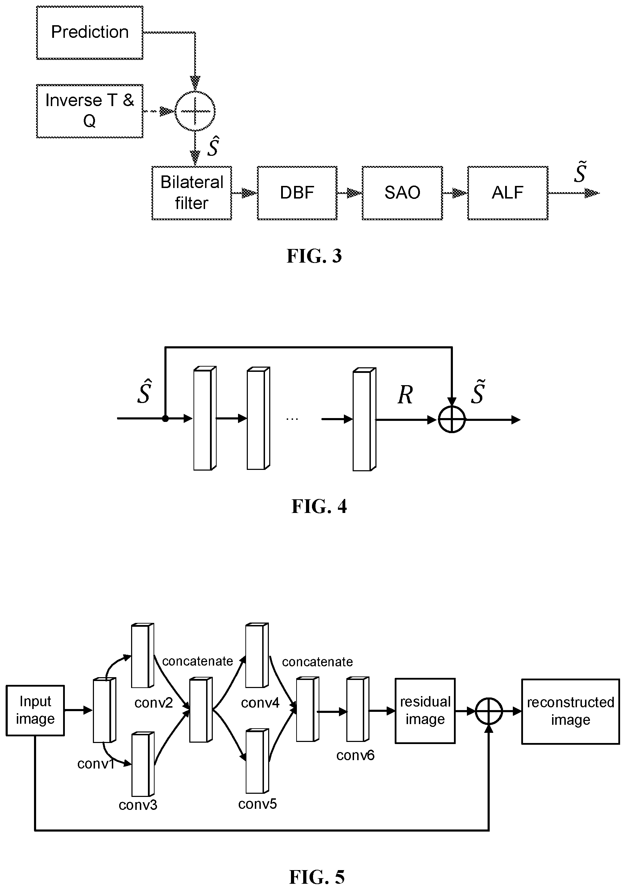

As described above for HEVC, deblocking and SAO filters are used as in-loop filters to reduce encoding artifacts. More generally for video compression, other filters can be used for in-loop filtering. For example, as shown in FIG. 3 for the current JEM 6.0 (Joint Exploration Model 6.0) developed by JVET (Joint Video Exploration Team), four filters, namely, bilateral filter (BLF), the deblocking filter (DBF), SAO and ALF (Adaptive Loop Filter) are successively applied. These different filters are in general based on: (1) samples analysis and pixels classification and (2) class-dependent filtering.

For ease of notation, we refer to the input image to the encoder as S, input to in-loop filtering as $\hat{S}$, and output of in-loop filtering as $\tilde{S}$. $\hat{S}$ may also be referred to as an initial reconstruction or an initial reconstructed version of the image. As shown in FIG. 3, the input to in-loop filtering is the sum of predicted samples and the decoded prediction residuals. For certain blocks, when prediction residuals are zero or do not exist (e.g., in SKIP mode), the input to in-loop filtering is the predicted samples directly.

In the current JEM, a bilateral filter is applied before the deblocking filter, to the reconstructed samples $\hat{S}$. BLF works by basing the filter weights not only on the distance to neighboring samples but also on their values. Each sample in the initial reconstructed picture is replaced by a weighted average of itself and its neighbors. The weights are calculated based on the distance from the center sample as well as the difference in sample values. Because the filter is in the shape of a small plus sign (i.e., the filter uses four neighbor samples), all of the distances are 0 or 1.

A sample located at (i, j), will be filtered using its neighboring samples. The weight $\omega(i,j,k,l)$ is the weight assigned to a neighboring sample (k, l) for filtering the current sample (i, j), and is defined as:

$$\omega(i, j, k, l) = e^{\left(-\frac{(i-k)^2 + (j-l)^2}{2\sigma_d^2} - \frac{\|I(i,j) - I(k,l)\|^2}{2\sigma_r^2}\right)}$$

where I(i, j) and I(k, l) are the intensity values of samples (i, j) and (k, l), respectively, in the initial reconstruction $\hat{S}$, $\sigma_d$ is the spatial parameter, and $\sigma_r$ is the range parameter. The properties (or strength) of the bilateral filter is controlled by parameters $\sigma_d$ and $\sigma_r$. In JEM 6.0, $\sigma_d$ is set dependent on the transform unit size and prediction mode, and $\sigma_r$ is set based on the QP used for the current block.

The output filtered sample value $I_F(i,j)$ is calculated as:

$$I_F(i, j) = \frac{\sum_{k,l} I(k, l) * \omega(i, j, k, l)}{\sum_{k,l} \omega(i, j, k, l)}$$

The proposed bilateral filter is applied to each CU, or blocks of maximum size $16 \times 16$ if the CU is larger than 16x16, in both the encoder and the decoder. In JEM 6.0, the bilateral filter is performed inside the RDO (Rate-Distortion Optimization) loop at the encoder side. Thus, the filtered blocks may also be used for predicting the subsequent blocks (intra prediction).

ALF is basically designed based on Wiener filter, which aims at designing linear filters (1D or 2D) to minimize the L2-distortion, that is, minimizing the square error between the filtered samples and the reference ones (in general the original samples). In the JEM, ALF with block based filter adaption is applied. For the luma component, one among 25 filters is selected for each 2x2 block based on the direction and activity of signal.

Up to three circular symmetric filter shapes are supported for the luma component. An index is signalled at the picture level to indicate the filter shape used for the luma component of a picture. For chroma components in a picture, the 5x5 diamond shape filter is always used.

The block classification is applied to each 2x2 block, which is categorized into one out of 25 classes based on the local signal analysis (gradients, directionality). For both chroma components in a picture, no classification method is applied, i.e., a single set of ALF coefficients is applied to each chroma component.

The filtering process of luma component can be controlled at the CU level. A flag is signalled to indicate whether ALF is applied to the luma component of a CU. For chroma component, whether ALF is applied or not is indicated at the picture level only. ALF filter parameters are signalled in the first CTU, before the SAO parameters of the first CTU. Up to 25 sets of luma filter coefficients could be signalled. To reduce bits overhead, filter coefficients of different classification can be merged. Also, the ALF coefficients of reference pictures can be reused as ALF coefficients of a current picture.

There are also some works in using deep learning to perform in-loop filtering. The field of deep learning concerns the use of deep neural networks. A neural network contains neurons that are organized by groups called layers. There are the input layer, output layer and hidden layer(s) in a neural network. A deep neural network has two or more hidden layers.

Video compression may be considered as linked to pattern recognition, as compression often looks for repetitive patterns in order to remove redundancies. Because artifact removal or artifact reduction in video compression can be considered as recognizing and restoring the original images, it is possible to use neural networks as filters to reduce artifacts. In this application, artifact reduction is also referred to as image restoration, and the neural networks for reducing artifacts may also be referred to as the restoration filters.

FIG. 4 shows an exemplary M-layer convolutional neural network, where the initial reconstruction from the video codec without filtering ($\hat{S}$) is restored as $\tilde{S}$ by adding a residue R computed by the CNN. Mathematically, the network can be represented as:

$$F_1(\widehat{\boldsymbol{S}}) = g(W_1 * \widehat{\boldsymbol{S}} + B_1),$$
$$F_i(\widehat{\boldsymbol{S}}) = g(W_i * F_{i-1}(\widehat{\boldsymbol{S}}) + B_i), i = \{2, ..., M-1\} \qquad (1)$$
$$F_M(\widehat{\boldsymbol{S}}) = g(W_M * F_{M-1}(\widehat{\boldsymbol{S}}) + B_M) + \widehat{\boldsymbol{S}},$$

$$\tilde{\boldsymbol{S}} = F_M(\widehat{\boldsymbol{S}})$$

where $W_i$ and $B_i$ are the weights and bias parameters for layer $i$, respectively, g() is the activation function (e.g., a sigmoid or a Rectified Linear Unit (ReLU) function), and * denotes the convolution operation. The output $\tilde{S}$ from the CNN might be stored in the Reference Picture Buffer (RPB) to be used as predictor for encoding or decoding subsequent frames.

The parameter set $\Theta$, including $W_i$ and $B_i$, $i = \{1, ..., M\}$, can be trained from K training samples $\{S_k\}$, $k = \{1, ..., K\}$, for example, by minimizing a loss function defined based on the error between restored images and original images, as:

$$L(\theta) = \frac{1}{K} \sum_{k=1}^{K} \left\| F(\widehat{\boldsymbol{S}}_k) - \boldsymbol{S}_k \right\|^2$$

Note that the loss function may also contain other terms in order to stabilize the convergence or avoid over-fitting. These regularization terms can be simply added to the error function.

To reduce compression artifacts, in an article by Yuanying Dai et al., entitled "A convolutional neural network approach for post-processing in HEVC intra coding," in International Conference on Multimedia Modeling, pp. 28-39, Springer, 2017, a CNN-based post-processing algorithm for HEVC, a Variable-filter-size Residue-learning CNN (VRCNN), is designed to improve the performance and to accelerate network training.

In particular, as shown in FIG. 5, the VRCNN is structured as a four-layer fully convolutional neural network, where the four layers may be considered to correspond to feature extraction, feature enhancement, mapping, and reconstruction, respectively. To adapt to variable size transform in HEVC, the second layer uses a combination of 5x5 and 3x3 filters (conv2, conv3), and the third layer uses a combination of 3x3 and 1x1 filters (conv4, conv5). In addition, because the input before filtering and the output after filtering in artifact reduction are usually similar, learning the difference between them can be easier and more robust. Thus, VRCNN uses residue learning techniques, where the CNN is designed to learn the residue between the output and input rather than directly learning the output.

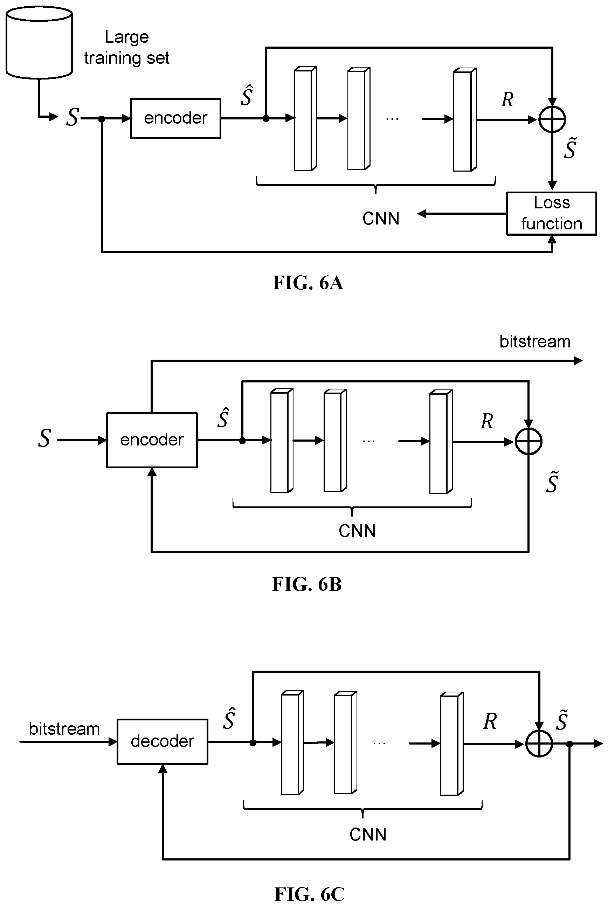

FIG. 6A shows that a CNN is trained on a large database of images, where the network tries to restore a reconstructed image by an encoder, by minimizing the error with the original image. FIG. 6B shows that the resulting CNN is used in the encoder to restore images after reconstruction. The restored images can then be displayed or used as reference to predict other frames in the sequence. Symmetrically, the decoder as shown in FIG. 6C receives the bitstream, reconstructs the images and restores the images using the same CNN.

VRCNN only uses reconstructed images to train and apply the CNN at different QPs, without using other information that is available from the encoder or decoder. Thus, the input to the CNN does not explicitly take into account the particular artifacts of blocks effects which appear on the block boundaries, nor the artifacts depending on the block coding type.

The present embodiments are directed to a mode-aware CNN for filtering. In particular, different information (also referred to as "mode" in general) that is available from the encoder or decoder, in addition to the initial reconstructed image, is also used as input to the CNN during the training, encoding or decoding process.

In one embodiment, QPs (Quantization Parameters), block partitioning of the image and the block coding type can be used as additional inputs. Since the CNN takes as an input the reconstructed image as a set of samples, we may also input the partitioning, the coding mode information and the QP aligned with the reconstructed samples of the image, using additional channels as input of the CNN.

In VRCNN and other CNNs, the input to the first layer of the CNN is usually the Y component of the reconstructed image, i.e., an image of size $W \times H \times 1$, where W and H are the width and height of the image. To also use other information as input, we consider the reconstructed image as one channel, and input other information using additional channels.

In one embodiment, the boundary information of the partitions is organized into one sample array at the same size as the reconstructed image to form a boundary image. A sample in the boundary image indicates whether a corresponding sample is at the partition boundary or not (i.e., a partition frontier or not). The partition may be a CU, PU, TU, CTU or other regions.

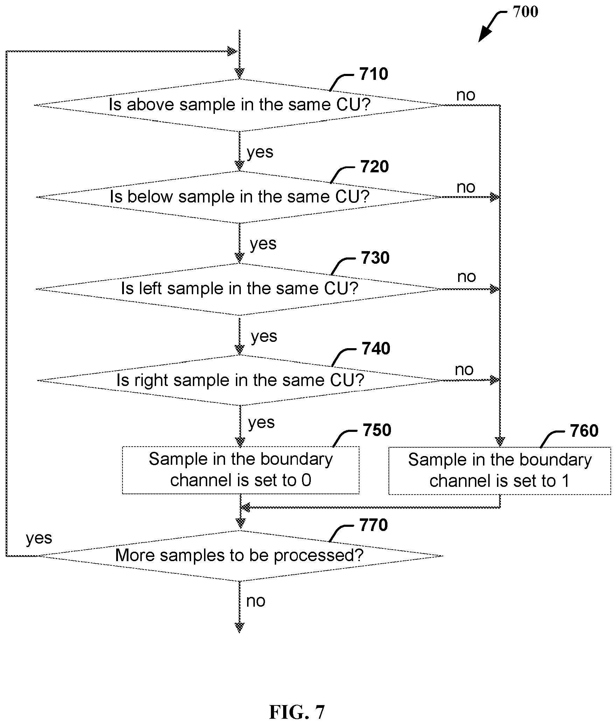

FIG. 7 illustrates an exemplary method 700 for generating the boundary image, according to an embodiment. In this example, CU boundary is considered for partition boundary. In steps 710, 720, 730 and 740, whether the above sample, the below sample, the left sample, or the right sample is in the same CU as the current sample is checked. If any of the condition is not satisfied, the current sample is a boundary sample and the corresponding sample in the boundary image is set (760) to 1. Otherwise, the sample in the boundary image is set (750) to 0. At step 770, if it is determined that more samples are to be processed, the control returns to step 710. Otherwise, the boundary image is obtained. For image borders, we may consider them as boundary or non-boundary. In practice, we may use a zero-padding policy.

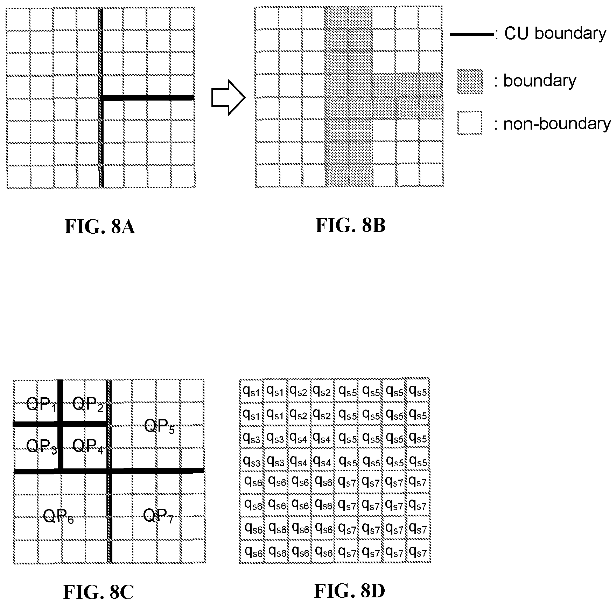

FIG. 8A illustrates that an exemplary image is divided into three coding units, where the partition frontiers are shown in bold lines, and FIG. 8B shows the corresponding boundary image. Specifically, pixels adjacent to the partition frontiers are considered as boundary pixels, and other pixels are considered as non-boundary pixels. In the boundary image, the boundary pixels are represented by "1" and the non-boundary pixels are represented by "0." The boundary information may help the CNN to understand where the blocking artifacts are, and thus, may improve the CNN since the network does not need to spending parameters looking for blocking artifacts.

To use the QP information, we may generate a sample array at the same size as the reconstructed image to form a QP image, where each sample in the QP image represents the quantization step size. For example, in HEVC, we can use the conversion from QP in [0..51] to the quantization step size ($q_s$) as: $q_s(QP)=2^{(QP-4)/6}$. The conversion may further consider the quantization matrix and/or the quantization rounding offset. Note that QP is usually indicated for a block, for example, a macroblock in H.264/AVC or a CU in HEVC, to obtain QP for individual samples, QP for a particular sample is set to the QP for the block that includes the particular sample. The quantization step size may be normalized between 0 and 1 before input. Other parameters based on QP can also be used as input. Using the QP image as an additional channel can accommodate different quantization step sizes associated with different blocks.

To take into consideration of the coding modes, a channel corresponding to the pixel values of the prediction image is used. Because the prediction blocks for different coding modes, such as intra or inter, the type of filtering, have different characteristics, the prediction blocks or the prediction residuals would reflect the coding modes.

In another embodiment, we can use the coding mode directly. Similar to what is done for QP, we can create a channel with the value of the coding mode. For example, for intra direction, we can set a channel with the value of the angle of intra prediction, for example, with the angle value given in section 8.4.4.2.6 in the HEVC standard specification. However, as DC and planar modes are different, they may need a separate channel, for example set to 1 when the mode is active.

In addition to the intra prediction mode, many other modes exist for a block, for example, but not limited to, the EMT (explicit multiple core transforms) index in JEM, the NSST (Non-separable secondary transform) index, and the boundary filtering type, and could be used as input for the CNN.

The input information may be organized into an array of WxHxD. When the reconstructed image, QP, boundary information and prediction image are all used for input, D = 4. The input can be organized as [Y component $\hat{S}$, Boundary image *BI*, Prediction image P, Quantization image Q]. In a variant, same configuration is repeated for all the color components (for example, Y, Cb, Cr). We may choose one or more of QP, boundary information and prediction image as input, and D can vary from 2 to 4.

The input information can also be organized in different manners, for example, some input channel may be input later in the network. As described above, the four layers in the VRCNN may be considered as corresponding to feature extraction, feature enhancement, mapping, and reconstruction, respectively. In one embodiment, the QP may only be used as input to the feature enhancement stage where the QP information may be more relevant. By using the QP information at a later stage, the CNN can use fewer parameters in the earlier stage. In general, one or more input channels may be used in an intermediate layer of the CNN to reduce the complexity.

In another example, different networks can be trained for different values of a particular parameter if this parameter has a large influence on the final reconstructed image. For instance, a set of CNN can be trained at different QPs and the one with the closest QP to the current CU is used. In another example, a weighted average of the input of several CNNs is used to filter the image.

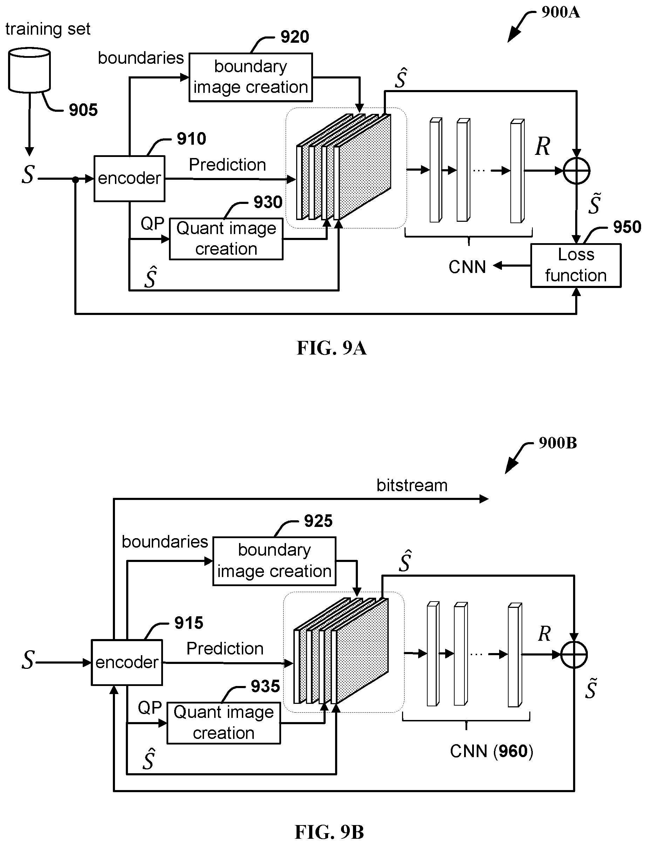

FIG. 9A illustrates an exemplary training process 900A using four channels as input, according to an embodiment. A large database of images (905) is used as the training input. A training image is encoded (910) by the encoder. The information available from the encoder, including, QP, partition boundaries, the initial reconstruction $\hat{S}$, and the prediction image is used as input to the CNN. In particular, the QP information is used to form (930) a quantization image, and the boundary information is used to form (920) a boundary image.

During the training process, residue learning technique is used. Namely, the initial reconstruction $\hat{S}$ is added (940) to the output of the final layer of the CNN to restore the image. The loss function (950) is based on the difference between the restored image $\tilde{S}$ and the original image S.

Mathematically, this network can be represented as:

$$F_1([\hat{S}, BI, P, Q]) = g(W_1 * [\hat{S}, BI, P, Q] + B_1),$$

$$F_i([\hat{S}, BI, P, Q]) = g(W_i * F_{i-1}([\hat{S}, BI, P, Q]) + B_i), i = \{2, ..., M-1\} \quad (2)$$

$$F_M([\hat{S}, BI, P, Q]) = g(W_M * F_{M-1}([\hat{S}, BI, P, Q]) + B_M) + \hat{S},$$

$$\tilde{S} = F_M(\hat{S})$$

where $W_i$ and $B_i$ are the weights and bias parameters for layer *i*, respectively, g() is the activation function (e.g., a sigmoid or a Rectified Linear Unit (ReLU) function), and * denotes the convolution operation. Note here only the first weight ($W_1$) is different from what is described in Eq. (1) as the first weight has a dimension of WxHxD instead of W×H×1. Also note that the activation function g() can be different by layers and can also contain other processing, for example, batch normalization.

FIG. 9B illustrates an exemplary encoding process 900B using multiple channels as input to a CNN, which corresponds to the trained CNN of FIG. 9A, according to an embodiment. In particular, an original image is encoded (915) by the encoder without in-loop filtering. The information available from the encoder, including, QP, partition boundaries, the initial reconstruction $\hat{S}$, and the prediction image, is used as input to the CNN (950). In particular, the QP information is used to form (935) a quantization image, and the boundary information is used to form (925) a boundary image.

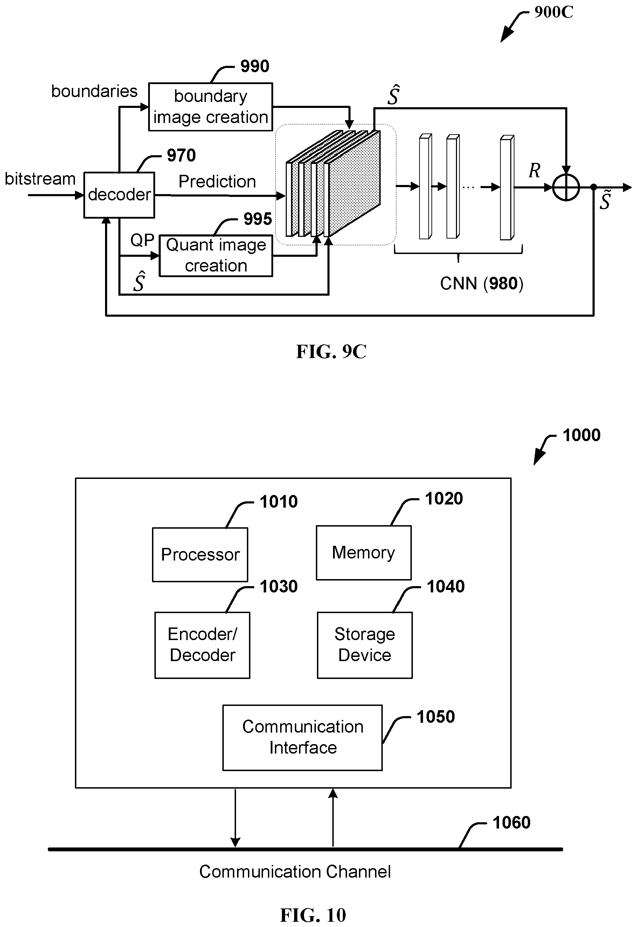

FIG. 9C illustrates an exemplary decoding process 900C using multiple channels as input to a CNN, which corresponds to the trained CNN of FIG. 9A, according to an embodiment. Similar to the encoding process 900B, four channels are used as input to the CNN. In particular, a bitstream is decoded (970) by the decoder without in-loop filtering. The information available from the decoder, including, QP, partition boundaries, the initial reconstruction $\hat{S}$, and the prediction image, is used as input to the CNN (980). In particular, the QP information is used to form (995) a quantization image, and the boundary information is used to form (990) a boundary image.

In the above, we describe the input on an image basis. However, the input reconstructed image may be divided into regions, for example, at a size of W'xH' with W'<W and H'<H. The QP image region, the boundary image region or the prediction image region would accordingly be generated at the size of W'×H'. For example, at the encoding process, a region may be a CU, PU or CTU. When the size of the region used for filtering is greater than the block size for QP or intra prediction, or more generally, than a block size of performing a coding mode, the filtering region may include several blocks and therefore several QPs or intra prediction direction modes. In this situation, the corresponding QP image region is generated such that a sample therein is associated with the QP for the block covering the sample. For example, if the filtering is performed at the CTU level and QP is sent at the CU level, the QP image for a CTU may contain several values of quantization step sizes, where each CU has a corresponding quantization step size.

FIG. 8C illustrates that an exemplary CTU is divided into seven coding units, where the CU boundaries are shown in bold lines, and FIG. 8D shows the corresponding QP image. Specifically, for a sample corresponding to a CU with QPi, quantization step size qsi corresponding to $QP_i$ is used in the QP image.

In the above, we describe the mode-aware CNN for in-loop filtering. The present embodiments can also be applied to post-processing outside the coding loop to enhance image quality before rendering, or in other modules where filtering can be applied.

Different embodiments above are described with respect to a residue-learning CNN. The present embodiments can be applied to other types of CNNs or non-convolutional neural networks. In the above, the MSE is used for calculating the loss function in the exemplary embodiments. However, other error functions, such as a perceptual, differentiable metric, for example, the MS-SSIM can be used for the loss function.

In the above, we assume all in-loop filters, such as in-loop filters (165, 265) in an HEVC video encoder or decoder, are replaced by the mode-aware CNN. In other embodiment, the mode-aware CNN can be used together with other in-loop filters, in parallel or successively. In addition, because the mode-aware approach uses the information from the block itself when it is applied at a block level, the mode-aware network can be used in the RDO decision, similar to how the bilateral filter is tested in the RDO decision.

Various methods are described above, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, the number of channels. It should be noted that the specific values are for exemplary purposes and the present embodiments are not limited to these specific values.

In the above, various embodiments are described with respect to JVET and the HEVC standard. However, the present embodiments are not limited to JVET or HEVC, and can be applied to other standards, recommendations, and extensions thereof. Various embodiments described above can be used individually or in combination.

FIG. 10 illustrates a block diagram of an exemplary system in which various aspects of the exemplary embodiments may be implemented. System 1000 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1000 may be communicatively coupled to other similar systems, and to a display via a communication channel as shown in FIG. 10 and as known by those skilled in the art to implement the exemplary video system described above.

The system 1000 may include at least one processor 1010 configured to execute instructions loaded therein for implementing the various processes as discussed above. Processor 1010 may include embedded memory, input output interface and various other circuitries as known in the art. The system 1000 may also include at least one memory 1020 (e.g., a volatile memory device, a non-volatile memory device). System 1000 may additionally include a storage device 1020, which may include non-volatile memory, including, but not limited to, EEPROM, ROM, PROM, RAM, DRAM, SRAM, flash, magnetic disk drive, and/or optical disk drive. The storage device 1040 may comprise an internal storage device, an attached storage device and/or a network accessible storage device, as non-limiting examples. System 1000 may also include an encoder/decoder module 1030 configured to process data to provide an encoded video or decoded video.

Encoder/decoder module 1030 represents the module(s) that may be included in a device to perform the encoding and/or decoding functions. As is known, a device may include one or both of the encoding and decoding modules. Additionally, encoder/decoder module 1030 may be implemented as a separate element of system 1000 or may be incorporated within processors 1010 as a combination of hardware and software as known to those skilled in the art.

Program code to be loaded onto processors 1010 to perform the various processes described hereinabove may be stored in storage device 1040 and subsequently loaded onto memory 1020 for execution by processors 1010. In accordance with the exemplary embodiments, one or more of the processor(s) 1010, memory 1020, storage device 1040 and encoder/decoder module 1030 may store one or more of the various items during the performance of the processes discussed herein above, including, but not limited to the input video, the decoded video, the bitstream, equations, formula, matrices, variables, operations, and operational logic.

The system 1000 may also include communication interface 1050 that enables communication with other devices via communication channel 1060. The communication interface 1050 may include, but is not limited to a transceiver configured to transmit and receive data from communication channel 1060. The communication interface may include, but is not limited to, a modem or network card and the communication channel may be implemented within a wired and/or wireless medium. The various components of system 1000 may be connected or communicatively coupled together using various suitable connections, including, but not limited to internal buses, wires, and printed circuit boards.

The exemplary embodiments may be carried out by computer software implemented by the processor 1010 or by hardware, or by a combination of hardware and software. As a non-limiting example, the exemplary embodiments may be implemented by one or more integrated circuits. The memory 1020 may be of any type appropriate to the technical environment and may be implemented using any appropriate data storage technology, such as optical memory devices, magnetic memory devices, semiconductor-based memory devices, fixed memory and removable memory, as non-limiting examples. The processor 1010 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), copying the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method for video encoding, comprising:

   accessing a first reconstructed version of an image region of a picture of a video, said image region being partitioned into a plurality of blocks; and
   filtering said first reconstructed version of said image region by a neural network to form a second reconstructed version of said image region,
   wherein said neural network is responsive to block boundary information for samples in said image region and at least one of (1) information based on at least a quantization parameter for each of said plurality of blocks in said image region, and (2) prediction samples for said image region, and
wherein said block boundary information for said image region is organized into a data array, at a same size as said first reconstructed version of said image region, to be used as an input channel to said neural network, wherein a sample in said data array indicates whether a corresponding sample in an image block of said image region is at a partition frontier of said image block.

2. A method for video decoding, comprising:

accessing a first reconstructed version of an image region of a picture of an encoded video, said image region being partitioned into a plurality of blocks; and
filtering said first reconstructed version of said image region by a neural network to form a second reconstructed version of said image region,
wherein said neural network is responsive to block boundary information for samples in said image region and at least one of (1) information based on at least a quantization parameter for each of said plurality of blocks in said image region, and (2) prediction samples for said image region, and
wherein said block boundary information for said image region is organized into a data array, at a same size as said first reconstructed version of said image region, to be used as an input channel to said neural network, wherein a sample in said data array indicates whether a corresponding sample in an image block of said image region is at a partition frontier of said image block.

3. An apparatus for video encoding, comprising:
at least a memory and one or more processors coupled to said at least a memory, said one or more processors being configured to:

access a first reconstructed version of an image region of a picture of a video, said image region being partitioned into a plurality of blocks; and
filter said first reconstructed version of said image region by a neural network to form a second reconstructed version of said image region,
wherein said neural network is responsive to block boundary information for samples in said image region and at least one of (1) information based on at least a quantization parameter for each of said plurality of blocks in said image region, and (2) prediction samples for said image region, and
wherein said block boundary information for said image region is organized into a data array, at a same size as said first reconstructed version of said image region, to be used as an input channel to said neural network, wherein a sample in said data array indicates whether a corresponding sample in an image block of said image region is at a partition frontier of said image block.

4. An apparatus for video decoding, comprising:
at least a memory and one or more processors coupled to said at least a memory, said one or more processors being configured to:

access a first reconstructed version of an image region of a picture of an encoded video, said image region being partitioned into a plurality of blocks; and
filter said first reconstructed version of said image region by a neural network to form a second reconstructed version of said image region,
wherein said neural network is responsive to block boundary information for samples in said image region and at least one of (1) information based on at least a quantization parameter for each of said plurality of blocks in said image region, and (2) prediction samples for said image region, and
wherein said block boundary information for said image region is organized into a data array, at a same size as said first reconstructed version of said image region, to be used as an input channel to said neural network, wherein a sample in said data array indicates whether a corresponding sample in an image block of said image region is at a partition frontier of said image block.

5. The method of claim 1 or 2, or the apparatus of claim 3 or 4, wherein said neural network is a convolutional neural network.

6. The method of any one of claims 1, 2 and 5, further comprising, or the apparatus of any of claims 3-5, further being configured to perform:
forming a second data array having a same size as said image region, wherein each sample in said second data array is associated with said at least a quantization parameter for each of said plurality of blocks in said image region.

7. The method of any one of claims 1, 2, 5 and 6, or the apparatus of any one of claims 3-6, wherein said neural network is further responsive to one or more of (1) prediction residuals of said image region and (2) at least an intra prediction mode of said image region.

8. The method of any one of claims 1, 2 and 5-7, or the apparatus of any one of claims 3-7, wherein one or more channels of input to said neural network are used as input for an intermediate layer of said neural network.

9. The method of any one of claims 1, 2 and 5-8, or the apparatus of any one of claims 3-8, wherein said first reconstructed version of said image region is based on said prediction samples and prediction residuals for said image region.

10. The method of any one of claims 1, 2 and 5-9, or the apparatus of any one of claims 3-9, wherein said image block corresponds to a Coding Unit, a Coding Block, or a Coding Tree Unit.

11. The method of any one of claims 1, 2 and 5-10, or the apparatus of any one of claims 3-10, wherein said second reconstructed version of said image region is used to predict another image region.

12. The method of any one of claims 1, 2 and 5-11, or the apparatus of any one of claims 3-11, wherein said neural network is based on residue learning.

13. A computer program comprising software code instructions for performing the method according to any one of claims 1, 2 and 5-12, when the computer program is executed by one or more processors.

**Patentansprüche**

1. Verfahren zur Videocodierung, umfassend:

Zugreifen auf eine erste rekonstruierte Version einer Bildregion eines Bildes eines Videos, wobei die Bildregion in eine Vielzahl von Blöcken partitioniert ist; und
Filtern der ersten rekonstruierten Version der Bildregion durch ein neuronales Netz, um eine zweite rekonstruierte Version der Bildregion zu bilden,
wobei das neuronale Netz anspricht auf Blockgrenzinformationen für Abtastwerte in der Bildregion und mindestens eine der folgenden Informationen: (1) Informationen, die zumindest auf einem Quantisierungsparameter für jeden der Vielzahl von Blöcken in der Bildregion basieren, und (2) Vorhersageabtastwerte für die Bildregion, und
wobei die Blockgrenzinformationen für die Bildregion in einem Datenfeld organisiert sind, das die gleiche Größe wie die erste rekonstruierte Version der Bildregion hat und als Eingangskanal für das neuronale Netz dient,
wobei ein Abtastwert in dem Datenfeld angibt, ob ein entsprechender Abtastwert in einem Bildblock der Bildregion an einer Partitionsgrenze des Bildblocks liegt.

2. Verfahren zur Videodecodierung, umfassend:

Zugreifen auf eine erste rekonstruierte Version einer Bildregion eines Bildes eines codierten Videos, wobei die Bildregion in eine Vielzahl von Blöcken partitioniert ist; und
Filtern der ersten rekonstruierten Version der Bildregion durch ein neuronales Netz, um eine zweite rekonstruierte Version der Bildregion zu bilden,
wobei das neuronale Netz anspricht auf Blockgrenzinformationen für Abtastwerte in der Bildregion und mindestens eine der folgenden Informationen: (1) Informationen, die zumindest auf einem Quantisierungsparameter für jeden der Vielzahl von Blöcken in der Bildregion basieren, und (2) Vorhersageabtastwerte für die Bildregion, und
wobei die Blockgrenzinformationen für die Bildregion in einem Datenfeld organisiert sind, das die gleiche Größe wie die erste rekonstruierte Version der Bildregion hat und als Eingangskanal für das neuronale Netz dient,
wobei ein Abtastwert in dem Datenfeld angibt, ob ein entsprechender Abtastwert in einem Bildblock der Bildregion an einer Partitionsgrenze des Bildblocks liegt.

3. Vorrichtung zur Videocodierung, umfassend:

mindestens einen Speicher und einen oder mehrere Prozessoren, die an den mindestens einen Speicher angebunden sind, wobei der eine oder die mehreren Prozessoren konfiguriert sind zum:

Zugreifen auf eine erste rekonstruierte Version einer Bildregion eines Bildes eines Videos, wobei die Bildregion in eine Vielzahl von Blöcken partitioniert ist; und
Filtern der ersten rekonstruierten Version der Bildregion durch ein neuronales Netz, um eine zweite rekonstruierte Version der Bildregion zu bilden,
wobei das neuronale Netz anspricht auf Blockgrenzinformationen für Abtastwerte in der Bildregion und mindestens eine der folgenden Informationen: (1) Informationen, die zumindest auf einem Quantisierungsparameter für jeden der Vielzahl von Blöcken in der Bildregion basieren, und (2) Vorhersageabtastwerte für die Bildregion, und
wobei die Blockgrenzinformationen für die Bildregion in einem Datenfeld organisiert sind, das die gleiche Größe wie die erste rekonstruierte Version der Bildregion hat und als Eingangskanal für das neuronale Netz dient, wobei ein Abtastwert in dem Datenfeld angibt, ob ein entsprechender Abtastwert in einem Bildblock der Bildregion an einer Partitionsgrenze des Bildblocks liegt.

4. Vorrichtung zur Videodecodierung, umfassend:
mindestens einen Speicher und einen oder mehrere Prozessoren, die an den mindestens einen Speicher angebunden sind, wobei der eine oder die mehreren Prozessoren konfiguriert sind zum:

Zugreifen auf eine erste rekonstruierte Version einer Bildregion eines Bildes eines codierten Videos, wobei die Bildregion in eine Vielzahl von Blöcken partitioniert ist; und
Filtern der ersten rekonstruierten Version der Bildregion durch ein neuronales Netz, um eine zweite rekonstruierte Version der Bildregion zu bilden,
wobei das neuronale Netz anspricht auf Blockgrenzinformationen für Abtastwerte in der Bildregion und mindestens eine der folgenden Informationen: (1) Informationen, die zumindest auf einem Quantisierungsparameter für jeden der Vielzahl von Blöcken in der Bildregion basieren, und (2) Vorhersageabtastwerte für die Bildregion, und
wobei die Blockgrenzinformationen für die Bildregion in einem Datenfeld organisiert sind, das die gleiche Größe wie die erste rekonstruierte Version der Bildregion hat und als Eingangskanal für das neuronale Netz dient, wobei ein Abtastwert in dem Datenfeld angibt, ob ein entsprechender Abtastwert in einem Bildblock der Bildregion an einer Partitionsgrenze des Bildblocks liegt.

5. Verfahren nach Anspruch 1 oder 2, oder Vorrichtung nach Anspruch 3 oder 4, wobei das neuronale Netz ein neuronales Faltungsnetz ist.

6. Verfahren nach einem der Ansprüche 1, 2 und 5, das ferner umfasst, oder Vorrichtung nach einem der Ansprüche 3-5, die ferner ausgebildet ist zum:
Bilden eines zweiten Datenfeldes, das die gleich Größe wie die Bildregion hat, wobei jeder Abtastwert in dem zweiten Datenfeld mit dem zumindest einen Quantisierungsparameter für jeden der Vielzahl von Blöcken in der Bildregion verknüpft ist.

7. Verfahren nach einem der Ansprüche 1, 2, 5 und 6, oder Vorrichtung nach einem der Ansprüche 3-6, wobei das neuronale Netz ferner anspricht auf (1) Vorhersageresiduen der Bildregion, und/oder (2) zumindest einen Intra-Vorhersagemodus der Bildregion.

8. Verfahren nach einem der Ansprüche 1, 2 und 5-7, oder Vorrichtung nach einem der Ansprüche 3-7, wobei ein oder mehrere Kanäle von Eingaben für das neuronale Netz als Eingabe für eine Zwischenschicht des neuronalen Netzes verwendet werden.

9. Verfahren nach einem der Ansprüche 1, 2 und 5-8, oder Vorrichtung nach einem der Ansprüche 3-8, wobei die erste rekonstruierte Version der Bildregion auf den Vorhersageabtastwerten und Vorhersageresiduen für die Bildregion basiert.

10. Verfahren nach einem der Ansprüche 1, 2 und 5-9, oder Vorrichtung nach einem der Ansprüche 3-9, wobei der Bildblock einer Coding Unit, einem Coding Block oder einer Coding Tree Unit entspricht.

11. Verfahren nach einem der Ansprüche 1, 2 und 5-10, oder Vorrichtung nach einem der Ansprüche 3-10, wobei die zweite rekonstruierte Version der Bildregion verwendet wird, um eine weitere Bildregion vorauszuberechnen.

**12.** Verfahren nach einem der Ansprüche 1, 2 und 5-11, oder Vorrichtung nach einem der Ansprüche 3-11, wobei das neuronale Netz auf Residuen-basiertem Lernen basiert.

**13.** Computerprogramm, umfassend Softwarecode-Befehle zur Durchführung des Verfahrens nach einem der Ansprüche 1, 2 und 5-12 bei Ausführung des Computerprogramms durch einen oder mehrere Prozessoren.

**Revendications**

**1.** Procédé d'encodage vidéo, comprenant les étapes consistant à :

accéder à une première version reconstruite d'une région d'image d'une image d'une vidéo, ladite région d'image étant partitionnée en une pluralité de blocs ; et
filtrer ladite première version reconstruite de ladite région d'image par un réseau neuronal pour former une seconde version reconstruite de ladite région d'image,
dans lequel ledit réseau neuronal est réactif vis-à-vis d'informations de frontières de bloc pour des échantillons dans ladite région d'image et au moins un parmi (1) des informations basées sur au moins un paramètre de quantification pour chacun parmi ladite pluralité de blocs dans ladite région d'image, et (2) des échantillons de prédiction pour ladite région d'image, et
dans lequel lesdites informations de frontières de bloc pour ladite région d'image sont organisées en un tableau de données, d'une même taille que ladite première version reconstruite de ladite région d'image, destiné à être utilisé en tant que canal d'entrée pour ledit réseau neuronal, dans lequel un échantillon dans ledit tableau de données indique si un échantillon correspondant dans un bloc d'image de ladite région d'image est au niveau d'une frontière de partition dudit bloc d'image.

**2.** Procédé de décodage vidéo, comprenant les étapes consistant à :

accéder à une première version reconstruite d'une région d'image d'une image d'une vidéo encodée, ladite région d'image étant partitionnée en une pluralité de blocs ; et
filtrer ladite première version reconstruite de ladite région d'image par un réseau neuronal pour former une seconde version reconstruite de ladite région d'image,
dans lequel ledit réseau neuronal est réactif vis-à-vis d'informations de frontières de bloc pour des échantillons dans ladite région d'image et au moins un parmi (1) des informations basées sur au moins un paramètre de quantification pour chacun parmi ladite pluralité de blocs dans ladite région d'image, et (2) des échantillons de prédiction pour ladite région d'image, et
dans lequel lesdites informations de frontières de bloc pour ladite région d'image sont organisées en un tableau de données, d'une même taille que ladite première version reconstruite de ladite région d'image, destiné à être utilisé en tant que canal d'entrée pour ledit réseau neuronal, dans lequel un échantillon dans ledit tableau de données indique si un échantillon correspondant dans un bloc d'image de ladite région d'image est au niveau d'une frontière de partition dudit bloc d'image.

**3.** Appareil pour l'encodage vidéo, comprenant :
au moins une mémoire et un ou plusieurs processeurs couplés à ladite au moins une mémoire, lesdits un ou plusieurs processeurs étant conçus pour :

accéder à une première version reconstruite d'une région d'image d'une image d'une vidéo, ladite région d'image étant partitionnée en une pluralité de blocs ; et
filtrer ladite première version reconstruite de ladite région d'image par un réseau neuronal pour former une seconde version reconstruite de ladite région d'image,
dans lequel ledit réseau neuronal est réactif vis-à-vis d'informations de frontières de bloc pour des échantillons dans ladite région d'image et au moins un parmi (1) des informations basées sur au moins un paramètre de quantification pour chacun parmi ladite pluralité de blocs dans ladite région d'image, et (2) des échantillons de prédiction pour ladite région d'image, et
dans lequel lesdites informations de frontières de bloc pour ladite région d'image sont organisées en un tableau de données, d'une même taille que ladite première version reconstruite de ladite région d'image, destiné à être utilisé en tant que canal d'entrée pour ledit réseau neuronal, dans lequel un échantillon dans ledit tableau de données indique si un échantillon correspondant dans un bloc d'image de ladite région d'image est au niveau d'une frontière de partition dudit bloc d'image.

4. Appareil pour décodage vidéo, comprenant :
au moins une mémoire et un ou plusieurs processeurs couplés à ladite au moins une mémoire, lesdits un ou plusieurs processeurs étant conçus pour :

accéder à une première version reconstruite d'une région d'image d'une image d'une vidéo encodée, ladite région d'image étant partitionnée en une pluralité de blocs ; et
filtrer ladite première version reconstruite de ladite région d'image par un réseau neuronal pour former une seconde version reconstruite de ladite région d'image,
dans lequel ledit réseau neuronal est réactif vis-à-vis d'informations de frontières de bloc pour des échantillons dans ladite région d'image et au moins un parmi (1) des informations basées sur au moins un paramètre de quantification pour chacun parmi ladite pluralité de blocs dans ladite région d'image, et (2) des échantillons de prédiction pour ladite région d'image, et
dans lequel lesdites informations de frontières de bloc pour ladite région d'image sont organisées en un tableau de données, d'une même taille que ladite première version reconstruite de ladite région d'image, destiné à être utilisé en tant que canal d'entrée pour ledit réseau neuronal, dans lequel un échantillon dans ledit tableau de données indique si un échantillon correspondant dans un bloc d'image de ladite région d'image est au niveau d'une frontière de partition dudit bloc d'image.

5. Procédé selon la revendication 1 ou 2, ou appareil selon la revendication 3 ou 4, dans lequel ledit réseau neuronal est un réseau neuronal convolutif.

6. Procédé selon l'une quelconque des revendications 1, 2 et 5, comprenant en outre, ou appareil selon l'une quelconque des revendications 3 à 5, étant en outre conçu pour réaliser, l'étape consistant à :
former un second tableau de données ayant une taille identique à celle de ladite région d'image, dans lequel chaque échantillon dans ledit second tableau de données est associé audit au moins un paramètre de quantification pour chacun parmi ladite pluralité de blocs dans ladite région d'image.

7. Procédé selon l'une quelconque des revendications 1, 2, 5 et 6, ou appareil selon l'une quelconque des revendications 3 à 6, dans lequel ledit réseau neuronal est en outre réactif vis-à-vis d'un ou plusieurs parmi (1) des résidus de prédiction de ladite région d'image et (2) au moins un mode d'intra-prédiction de ladite région d'image.

8. Procédé selon l'une quelconque des revendications 1, 2 et 5 à 7, ou appareil selon l'une quelconque des revendications 3 à 7, dans lequel un ou plusieurs canaux d'entrée pour ledit réseau neuronal sont utilisés en tant qu'entrée pour une couche intermédiaire dudit réseau neuronal.

9. Procédé selon l'une quelconque des revendications 1, 2 et 5 à 8, ou appareil selon l'une quelconque des revendications 3 à 8, dans lequel ladite première version reconstruite de ladite région d'image est basée sur lesdits échantillons de prédiction et lesdits résidus de prédiction pour ladite région d'image.

10. Procédé selon l'une quelconque des revendications 1, 2 et 5 à 9, ou appareil selon l'une quelconque des revendications 3 à 9, dans lequel ledit bloc d'image correspond à une Coding Unit, un Coding Block ou une Coding Tree Unit.

11. Procédé selon l'une quelconque des revendications 1, 2 et 5 à 10, ou appareil selon l'une quelconque des revendications 3 à 10, dans lequel ladite seconde version reconstruite de ladite région d'image est utilisée pour prévoir une autre région d'image.

12. Procédé selon l'une quelconque des revendications 1, 2 et 5 à 11, ou appareil selon l'une quelconque des revendications 3 à 11, dans lequel ledit réseau neuronal est basé sur l'apprentissage résiduel.

13. Programme informatique comprenant des instructions de code logiciel destinées à réaliser le procédé selon l'une quelconque des revendications 1, 2 et 5 à 12, lorsque le programme informatique est exécuté par un ou plusieurs processeurs.

100

110   125   130   145

+   Transform   Quantization   Entropy
⊖                                Coding
−

140
Inverse
Quantization

150
Inverse
Transform

155

105

160
Intra prediction

170
Motion
Compensation

175
Motion
Estimation

165
In-loop
Filters

180
Reference
Picture Buffer

**FIG. 1**

200

230   240   250
Entropy   Inverse   Inverse
Decoding   Quantization   Transform

255

270

260
Intra Prediction

275
Motion
Compensation

280
Reference
Picture Buffer

265
In-loop Filters

**FIG. 2**

**FIG. 3**

**FIG. 4**

**FIG. 5**

**FIG. 6A**

**FIG. 6B**

**FIG. 6C**

700

```
        ┌──────────────────────────────────────┐
        │                                       ▼
        │                              ┌─710
        │                    ◇─────────────────────◇   no
        │        Is above sample in the same CU?  ├─────────┐
        │                    ◇─────────────────────◇         │
        │                             │ yes                   │
        │                              ┌─720                  │
        │                    ◇─────────────────────◇   no    │
        │        Is below sample in the same CU?  ├──────┐   │
        │                    ◇─────────────────────◇      │   │
        │                             │ yes              │   │
        │                              ┌─730             │   │
        │                    ◇─────────────────────◇   no│   │
        │        Is left sample in the same CU?   ├───┐  │   │
        │                    ◇─────────────────────◇   │  │   │
        │                             │ yes           │  │   │
        │                              ┌─740          │  │   │
        │                    ◇─────────────────────◇ no│  │   │
        │        Is right sample in the same CU?  ├─┐ │  │   │
        │                    ◇─────────────────────◇ │ │  │   │
        │                             │ yes          │ │  │   │
        │                       ┌─750                │ │  │  ▼
        │            ┌────────────────────┐        ┌─760
        │            │ Sample in the boundary│     ┌──────────────────────┐
        │            │ channel is set to 0   │     │ Sample in the boundary │
        │            └────────────────────┘        │ channel is set to 1    │
        │                       │                   └──────────────────────┘
        │                       ◄───────────────────────────┘
        │                       ▼    ┌─770
        │ yes          ◇─────────────────────◇
        └──────────────┤ More samples to be processed? │
                       ◇─────────────────────◇
                                │ no
                                ▼
```

**FIG. 7**

**FIG. 8A**

**FIG. 8B**

—— : CU boundary

▨ : boundary

▯ : non-boundary

**FIG. 8C**

**FIG. 8D**

**900A**

training set

boundaries

**920**

boundary
image creation

$\hat{S}$

**905**

**910**

$S$

encoder

Prediction

$R$

**930**

QP

Quant image
creation

$\hat{S}$

$\tilde{S}$

**950**

CNN

Loss
function

**FIG. 9A**

**900B**

bitstream

boundaries

**925**

boundary
image creation

$\hat{S}$

**915**

$S$

encoder

Prediction

$R$

**935**

QP

Quant image
creation

$\hat{S}$

$\tilde{S}$

CNN (**960**)

**FIG. 9B**

900C

boundaries

990
boundary
image creation

$\hat{S}$

bitstream

970
decoder  Prediction

$R$

$\tilde{S}$

QP

995
Quant image
creation

$\hat{S}$

CNN (980)

**FIG. 9C**

1000

1010
Processor

1020
Memory

1030
Encoder/
Decoder

1040
Storage
Device

1050
Communication
Interface

1060
Communication Channel

**FIG. 10**

**EP 3 677 034 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017036370 A1

- US 20170161876 A1

**Non-patent literature cited in the description**

- A convolutional neural network approach for post-processing in HEVC intra coding. **YUANYING DAI et al.** International Conference on Multimedia Modeling. Springer, 2017, 28-39